**Europäisches Patentamt**

**European Patent Office**

**Office européen des brevets**

(11) Numéro de publication : **0 374 052 B1**

(12) # FASCICULE DE BREVET EUROPEEN

(45) Date de publication du fascicule du brevet :
23.09.92 Bulletin 92/39

(51) Int. Cl.$^5$ : **A01B 15/14**

(21) Numéro de dépôt : **89403492.5**

(22) Date de dépôt : **14.12.89**

(54) **Perfectionnement au dispostif de réglage pour charrue.**

(30) Priorité : **15.12.88 FR 8816771**

(43) Date de publication de la demande :
**20.06.90 Bulletin 90/25**

(45) Mention de la délivrance du brevet :
**23.09.92 Bulletin 92/39**

(84) Etats contractants désignés :
**AT BE CH DE ES FR GB IT LI LU NL SE**

(56) Documents cités :
**EP-A- 0 196 882**
**FR-A- 2 476 965**
**GB-A- 2 082 882**

(73) Titulaire : **CHARRUES NAUD**
**R.D. 752**
**F-49600 Andreze (FR)**

(72) Inventeur : **Naud, Bernard**
**La Valandière**
**F-49600 Andreze (FR)**

(74) Mandataire : **Phélip, Bruno et al**
**c/o Cabinet Harlé & Phélip 21, rue de La**
**Rochefoucauld**
**F-75009 Paris (FR)**

**Description**

La présente invention concerne un perfectionnement au dispositif de réglage pour charrue et en particulier pour charrue du type réversible portée ; le dispositif de réglage combinant un réglage de déport latéral et un réglage de dévers de pointe.

Le réglage du déport latéral consiste en un déplacement latéral de l'ensemble des corps de labour par rapport à l'axe d'avancement de la charrue. Ce réglage est généralement obtenu en faisant coulisser le bâti support des socs, par rapport à la tête support, d'une façon continue ou par brochage en différentes positions. Ce réglage vise à adapter la charrue à la voie du tracteur par lequel elle est tirée. Bien souvent ce réglage s'effectue par brochage, tous les 5 cm environ avec trois positions ou plus selon le type de charrue.

Le réglage du dévers de pointe consiste en un pivotement du bâti support des socs pour modifier l'angle des corps de charrue par rapport à la direction d'avancement de la charrue. Ce réglage s'effectue habituellement au moyen d'une vis de réglage ; il permet d'enlever du dévers de pointe, c'est-à-dire diminuer la largeur de travail, ou de mettre du dévers de pointe, c'est-à-dire augmenter la largeur de travail des corps. Cet angle varie dans une plage de 3° environ en plus ou en moins par rapport à l'axe d'avancement.

Des exemples de réalisation de dispositifs de réglage de charrues sont décrits dans les documents FR-A-1 397 999, GB-A-2 082 882 et EP-A-196 882.

Un autre dispositif de réglage est également décrit dans le document FR-A-2 536 626. Ce dispositif est aménagé sur une charrue qui comporte un bâti, ou âge, solidaire de la tête d'attelage et de retournement, au moyen d'une structure en forme de caisson. Ce caisson sert de moyen de liaison au support de tête d'attelage auquel il est fixé rigidement, et de point d'ancrage variable sur la longueur du bâti qui sert de point de traction ; cette structure permet de placer plus en arrière le point de traction dudit bâti, alors que l'extrémité avant de ce dernier est guidée dans ladite structure, près de la tête de retournement. Un système à biellette permet le réglage du déport et du dévers de la charrue.

Ces dispositifs de réglage tendent le plus souvent à simplifier la tâche de l'opérateur.

Ces réglages sont nécessaires, comme indiqué précédemment, lorsque la charrue est attelée à différents types de tracteurs dont les voies peuvent varier.

Le réglage du dévers dépend le plus souvent de la nature du terrain ; lorsqu'il est établi, il est avantageux de le conserver quel que soit le type de tracteur utilisé.

Cependant, les systèmes de réglage existants provoquent, lorsque l'on modifie le déport, une modification du réglage du dévers de pointe.

La présente invention vise à remédier à ces inconvénients ; elle propose un dispositif de réglage qui permet de conserver la valeur du dévers de pointe lorsque l'on modifie le déport de la charrue.

La présente invention a pour objet un dispositif de réglage pour une charrue du type précité, c'est-à-dire comportant une structure en forme de perche, qui assure la liaison entre la tête d'attelage et de retournement, et un point de traction situé sur la longueur du bâti ; l'extrémité avant de ce bâti étant soutenue et guidée par ladite perche.

L'invention concerne une charrue comportant une perche qui est solidaire, à l'une de ses extrémités, du support emmanché dans l'avant-train et qui est munie, à son autre extrémité d'un point d'ancrage variable sur la longueur du bâti, ou âge, supportant le socs, lequel bâti est guidé à son extrémité avant par ladite perche. Une telle charrue est connue de FR-A-2 536 626. Selon l'invention, la charrue est caractérisée en ce qu'elle comprend, d'une part, une glissière disposée à l'avant de la perche, de façon sensiblement perpendiculaire au sens d'avancement de la charrue, pour guider l'avant dudit bâti, et, d'autre part, au niveau de la partie arrière de ladite perche, une chape recevant une traverse qui est fixée sur la bâti, et qui est munie de trous répartis selon une ligne parallèle à la glissière ; ladite glissière est constituée : - d'une partie solidaire de l'extrémité avant du bâti, - d'une partie ajustable reliée à la perche et - d'un organe de manoeuvre interposé entre les deux parties ; la partie reliée à la perche comporte un double degré de liberté : - en rotation autour d'un axe perpendiculaire du plan médian du bâti et - en translation selon une direction sensiblement perpendiculaire à la glissière ; des moyens complémentaires permettent de solidariser à volonté ladite partie ajustable sur ladite perche dans la position voulue par l'opérateur.

Selon une disposition préférentielle de l'invention, la glissière est constituée d'une coulisse soudée sur la partie avant du bâti et d'un coulisseau solidaire de la perche ; l'ensemble coulisse-coulisseau est disposé dans un orifice aménagé dans et de part et d'autre du plan médian de la perche, à proximité du support.

Toujours selon l'invention, la coulisse est constituée de deux bras parallèles qui enserrent le coulisseau ; lequel coulisseau est ajusté dans la perche.

Selon une autre disposition de l'invention, la perche est constituée de deux longerons disposés de part et d'autre du coulisseau, et qui s'étendent depuis le support de la charrue jusqu'à la traverse du bâti qui comporte les différents trous d'ancrage.

Selon une autre disposition préférentielle de l'invention, un organe de manoeuvre en forme de vis est interposé entre la coulisse et le coulisseau de la glissière avant.

Toujours selon l'invention, le coulisseau est relié à la perche au moyen de vis guidées dans des trous oblongs orientés selon un axe perpendiculaire à la glissière.

Toujours selon l'invention, les trous oblongs sont aménagés dans des oreilles latérales disposées de part et d'autre de la perche et du plan médian du bâti supportant les socs.

Selon une autre disposition de l'invention, des moyens sont prévus pour interdire toute possibilité de réglage à partir des trous oblongs. Ces moyens consistent en une rondelle matricée de façon à se verrouiller dans le trou oblong et à figer la position du coulisseau.

L'invention sera encore illustrée à l'aide de la description suivante et des dessins annexés, donnés à titre indicatif et dans lesquels :

– la figure 1 est une vue de dessus de la charrue selon l'invention ;

– la figure 2 est une vue de côté de la charrue, avec des coupes partielles ;

– la figure 3 représente la rondelle de verrouillage du coulisseau ;

– la figure 4 est une vue en coupe selon 4-4 de la figure 3.

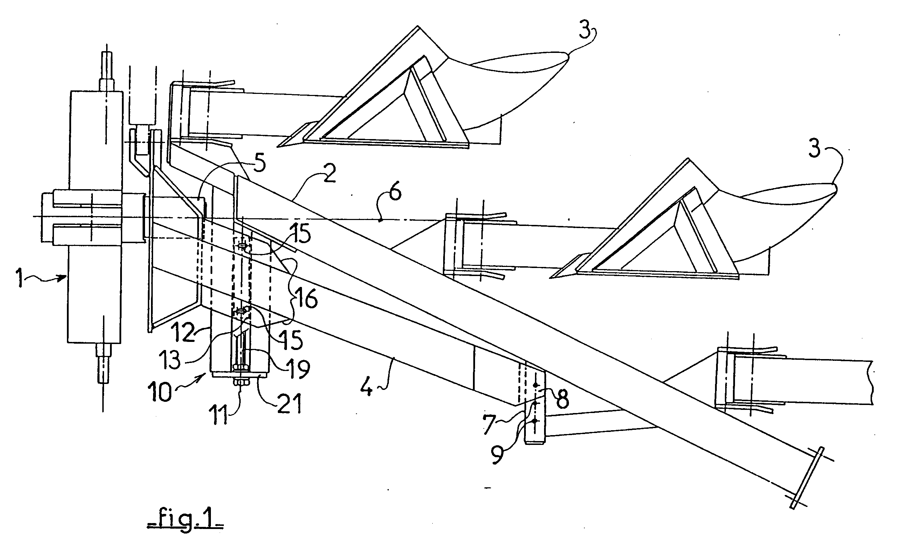

Telle que représentée figure 1, la charrue comporte un avant-train 1 relié à un tracteur, non représenté, par un système d'attelage classique du type trois points. Un bâti 2 supportant des socs 3 est relié à l'avant-train par l'intermédiaire d'une perche 4 et, à l'avant de la perche, d'un support 5 emmanché dans l'avant-train 1. Dans l'exemple de réalisation, la perche 4 est constituée de deux longerons 4a et 4b disposés symétriquement de part et d'autre du plan médian du bâti 2. Ces deux longerons 4a et 4b sont solidaires de la structure du support 5 et se rejoignent à leur extrémité arrière.

La charrue représentée est une charrue du type réversible, c'est-à-dire qu'elle comporte, de part et d'autre du plan médian du bâti 2, passant par l'axe de retournement 6, des socs 3 qui travaillent la terre alternativement, après basculement de 180° autour dudit axe de retournement 6. Les moyens de retournement, classiques, ne sont qu'esquissés sur les figures.

La perche 4 est reliée au bâti 2 au moyen d'un bras, ou traverse 7, disposé sur la longueur dudit bâti, au niveau du deuxième corps de labour sur la figure. La traction du bâti 2 de la charrue s'effectue en un point situé nettement en arrière de l'avant-train, à l'extrémité arrière de la perche 4. Cette extrémité arrière de la perche 4 est en forme de chape 8 et reçoit le bras 7 à coulissement. On remarque que le bras 7 comporte plusieurs trous 9 qui permettent de faire varier son point d'ancrage sur la chape 8 de la perche 4. L'espace entre deux trous 9 correspond sensiblement aux variations que l'on rencontre dans les voies des tracteurs susceptibles de tirer la charrue. Cet espace entre deux trous 9 est de l'ordre de 5 cm ou 10 cm par exemple.

Les trous 9, permettant le brochage de l'extrémité arrière de la perche 4 sur le bras 7, et le bras 7 lui-même, sont disposés sur une même ligne sensiblement perpendiculaire à l'axe de retournement 6 ; cet axe 6 correspond sensiblement au sens d'avancement de la charrue.

On remarque, vers l'avant du bâti 2, derrière le support 5, une glissière 10 disposée selon un axe 11 perpendiculaire à l'axe de retournement 6, c'est-à-dire perpendiculaire au sens d'avancement de la charrue. Cette glissière 10 est constituée d'une coulisse 12 solidaire de la partie avant du bâti 2 et d'un coulisseau 13 relié à la perche 4 par des moyens appropriés détaillés ci-après.

Cette glissière 10 se situe dans, et de part et d'autre, du plan médian du bâti 2 de la charrue. Elle traverse transversalement la perche 4 entre les deux longerons 4a et 4b, et elle est parallèle à l'alignement des trous 9 situés sur le bras 7. Cette glissière 10 est donc sensiblement perpendiculaire à l'axe de retournement 6, comme le bras 7.

On remarque que la coulisse 12 est constituée de deux bras longitudinaux parallèles 12a, 12b, qui enserrent avec un jeu approprié le coulisseau 13.

Le coulisseau 13 est ajusté entre les deux longerons 4a, 4b de la perche 4, de façon à pouvoir se déplacer librement lors du réglage de la charrue.

Le coulisseau 13 est relié à la perche 4 au moyen de trous oblongs 15 qui lui assurent deux degrés de liberté par rapport à ladite perche.

Les trous oblongs 15 permettant le mouvement du coulisseau 13, sont aménagés dans des oreilles 16 disposées sur chaque longeron 4a et 4b de la perche 4, c'est-à-dire de part et d'autre du plan médian du bâti 2.

Le coulisseau 13 est tout d'abord mobile en rotation autour d'un axe fictif qui est perpendiculaire au plan médian du bâti 2, c'est-à-dire un axe parallèle aux trous 9 réalisés dans le bras 7 ; il est également mobile en translation selon une direction sensiblement perpendiculaire à la glissière et en particulier à son axe 11, c'est-à-dire une direction qui correspond sensiblement au sens d'avancement de la charrue.

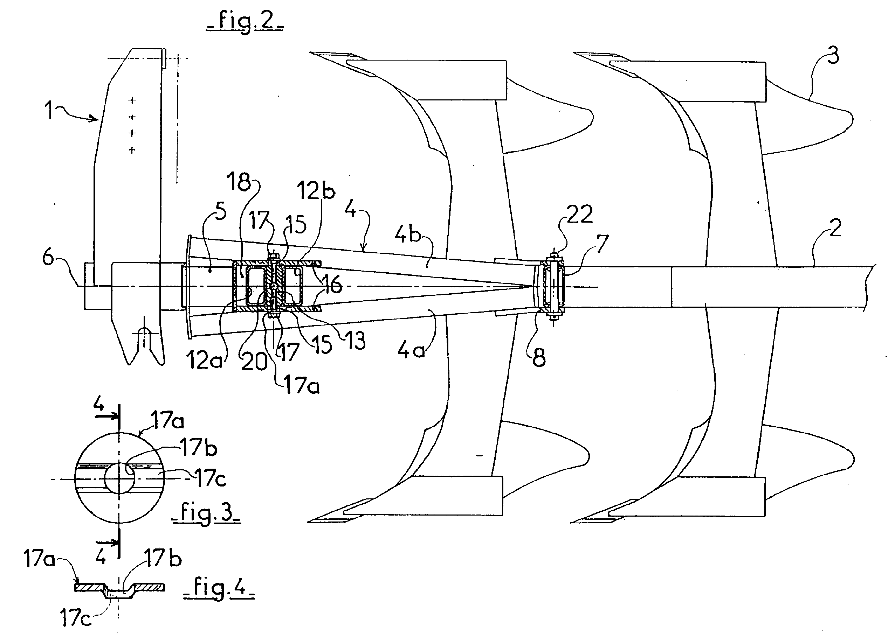

Le coulisseau 13 est solidarisé sur la perche 4 au moyen de vis 17 qui apparaissent principalement figure 2. Ces vis 17, non apparentes figure 1, s'engagent dans les trous oblongs 15 avant de se visser dans le coulisseau 13 sur une longueur inférieure à la moitié de la hauteur de cedit coulisseau, du fait de la présence d'une vis de réglage détaillée ci-après.

L'espace 18 aménagé dans la perche 4 pour loger la glissière 10, est suffisant pour permettre à cette dernière de prendre toutes les positions compatibles avec la gamme de réglage.

On peut aussi prévoir d'interposer une rondelle 17a entre la tête de la vis 17 et les oreilles 16 correspondantes. Cette rondelle 17a, figures 3 et 4, comporte un trou central 17b pour le passage de la vis 17 et des moyens qui s'intègrent dans le trou oblong 15, qui ont les mêmes dimensions que ce trou et qui immobilisent la vis 17 par rapport aux oreilles 16. On interdit de cette façon toute possibilité de réglage ou de déréglage du coulisseau 13. Les moyens en question sur la rondelle consistent en un matriçage 17c, qui épouse la forme des trous oblongs 15 et qui verrouille la rondelle. Avec ces rondelles, on fige le dévers dans une position précise moyenne par exemple.

On remarque encore, figure 1, une vis 19 servant d'organe de manoeuvre de la glissière 10. Cette vis 19, centrée sur l'axe 11, s'engage dans un orifice approprié 20 du coulisseau 13 et elle est immobilisée en translation sur une platine 21 fixée à l'extrémité de la coulisse, à l'opposé du bâti 2 par rapport à l'axe de retournement 6. Cette vis 19 permet à l'opérateur d'effectuer les réglages qui sont détaillés ci-après.

Pour régler la charrue, selon la nature du terrain par exemple, l'opérateur met ou enlève du dévers de pointe en faisant pivoter le bâti 2 autour de son point d'ancrage sur la chape 8 de la perche 4, c'est-à-dire autour de l'un des trous 9 aménagés dans le bras 7. Lorsque le dévers est fixé, l'opérateur resserre les vis 17 de façon à immobiliser le coulisseau 13 par rapport à la perche 4 dans une position bien déterminée. Si par la suite, la charrue est attelée à un tracteur dont la voie est différente, l'opérateur pourra effectuer un déport de son bâti 2 par une translation de ce dernier, guidé par la glissière 10, après avoir ôté la broche 22 qui l'assujettit à la perche 4 par le biais de la traverse 7 guidée dans la chape 8. Ce déport s'effectue généralement de pas en pas ; ce pas correspondant à l'écartement entre deux trous 9 sur le bras 7.

Si un nouveau réglage du dévers s'impose, l'opérateur doit tout d'abord désserrer les quatre vis 17 qui solidarisent le coulisseau 13 à la perche 4 par le biais des oreilles 16 ; puis, à l'aide de la vis 19, il fait pivoter le bâti 2 autour de son ancrage sur la chape 8, par l'un des trous 9 du bras 7. Le coulisseau, guidé dans les trous oblongs 15, prend une position en relation avec celle que prend la coulisse 12 dans son mouvement par rapport à la perche 4. Lorsque l'angle de dévers est obtenu, l'opérateur peut resserrer les quatre vis 17 de façon à verrouiller la position du coulisseau 13 par rapport à la perche 4.

Les signes de référencé insérés après les caractéristiques techniques mentionnées dans les revendications ont pour seul but de faciliter la compréhension de ces dernières, et n'en limitent aucunement la portée.

**Revendications**

1.- Charrue du type comportant une perche (4) qui est solidaire, à l'une de ses extrémités, du support (5) emmanché dans l'avant-train (1), et qui est munie, à son autre extrémité, d'un point d'ancrage (9) variable sur la longueur du bâti (2) supportant les socs (3), lequel bâti (2) est guidé à son extrémité avant par ladite perche (4), caractérisée en ce qu'elle comprend d'une part, une glissière (10) disposée à l'avant de la perche (4), de façon sensiblement perpendiculaire au sens d'avancement de la charrue, pour guider l'avant dudit bâti et, d'autre part, au niveau de la partie arrière de ladite perche (4), une chape (8) coopérant avec une traverse (7) fixée sur le bâti, laquelle traverse est munie de trous (9) répartis selon une ligne parallèle à la glissière (10) ; ladite glissière étant constituée : - d'une partie (12) solidaire de l'extrémité avant du bâti (2), - d'une partie (13) reliée à la perche et, - d'un organe de manoeuvre (19) interposé entre les deux parties (12, 13), et en ce que la partie (13) reliée à la perche (4) comporte un double degré de liberté : - en rotation autour d'un axe perpendiculaire au plan médian du bâti (2) et, - en translation selon une direction sensiblement perpendiculaire à ladite glissière (10).

2.- Charrue selon la revendication 1, caractérisée en ce qu'elle comporte une glissière (10) constituée d'une coulisse (12) soudée sur la partie avant du bâti (2) et d'un coulisseau (13) solidaire de la perche (4) ; l'ensemble constitué par la coulisse (12) et le coulisseau (13) est disposé dans un orifice (18) aménagé dans et de part et d'autre du plan médian de la perche (4), à proximité du support (5).

3.- Charrue selon la revendication 2, caractérisée en ce qu'elle comporte une coulisse (12) constituée de deux bras parallèles (12a, 12b) qui enserrent le coulisseau (13), lequel coulisseau (13) est ajusté dans l'orifice (18) de la perche.

4.- Charrue selon la revendication 3, caractérisée en ce qu'elle comporte une perche (4) constituée de deux longerons (4a, 4b) disposés de part et d'autre du coulisseau (13) et qui s'étendent depuis le support (5) jusqu'à la traverse (7) du bâti (2) comportant les différents trous d'ancrage (9) et qui forment, à l'extrémité de ladite perche (4), une chape (8) enserrant ladite traverse (7).

5.- Charrue selon l'une quelconque des revendications 1 à 4, caractérisée en ce qu'elle comporte un organe de manoeuvre (19) de la glissière (10), en forme de vis interposée entre une platine (21) située à l'extrémité de la coulisse (12), et le coulisseau (13).

6.- Charrue selon l'une quelconque des revendications 1 à 5, caractérisée en ce qu'elle comporte des moyens complémentaires permettant de solidariser à volonté le coulisseau (13) sur la perche (4) dans la position voulue par l'opérateur.

7.- Charrue selon la revendication 6, caractérisée en ce que les moyens de solidarisation du coulisseau (13) sur la perche (4), sont constitués de vis (17) guidées dans des trous oblongs (15) qui sont orientés selon un axe sensiblement perpendiculaire à la glissière (10).

8.- Charrue selon la revendication 7, caractérisée en ce qu'elle comporte des trous oblongs (15) aménagés dans des oreilles (16) disposées latéralement de part et d'autre de la perche (4) et du plan médian du bâti (2).

9.- Charrue selon la revendication 8, caractérisée en ce qu'elle comporte, entre la tête des vis (17) et les oreilles (16), des rondelles (17a) munies de moyens de verrouillage de la position desdites vis par rapport auxdites oreilles.

10.- Charrue selon la revendication 9, caractérisée en ce qu'elle comprend des rondelles (17a), interposées entre la tête des vis (17) et les oreilles (16), lesquelles rondelles (17a) comportent des matriçages (17c) dont la forme correspond à celle des trous oblongs (15) aménagés dans lesdites oreilles (16), de façon à verrouiller lesdites rondelles (17a) et interdire ainsi toute possibilité de réglage ou de déréglage du dévers.

**Patentansprüche**

1. Pflug der Bauart mit einer Deichsel (4), die an einem ihrer Enden mit dem Support (5) verbunden ist, der in das Fahrgestell (1) eingefügt ist, und die an ihrem anderen Ende mit einem auf der Länge des die Pflugschare (3) tragenden Gestells (2) variablen Verankerungspunkt (9) versehen ist, welches Gestell (2) an ihrem vorderen Ende von der Deichsel (4) geführt ist, dadurch gekennzeichnet, daß er einerseits eine Gleitführung (10) umfaßt, die vor der Deichsel (4) derart angeordnet ist, daß sie im wesentlichen senkrecht zur Fahrtrichtung des Pfluges ist zum Führen des Vorderteils des Gestells, und andererseits in Höhe der hinteren Partie der Deichsel (4) ein Gehäuse (8) umfaßt, das zusammenwirkt mit einer an dem Gestell befestigten Traverse (7), welche Traverse mit Löchern (9) versehen ist, die längs einer zu der Gleitführung (10) parallelen Linie verteilt sind, wobei die Gleitführung aufgebaut ist aus: Einer mit dem vorderen Ende des Gestells (2) verbundenen Partie (12), einer mit der Deichsel verbundenen Partie (13) und einem Manövrierorgan (19), das zwischen den beiden Partien (12, 13) eingefügt ist, und daß die mit der Deichsel (4) verbundene Partie (13) einen doppelten Freiheitsgrad besitzt: Zur Drehung um eine zur Mittelebene des Gestells (2) senkrechte Achse und zur Translation in einer Richtung im wesentlichen senkrecht zu der Gleitführung (10).

2. Pflug nach Anspruch 1, dadurch gekennzeichnet, daß er eine Gleitführung (10) umfaßt, bestehend aus einer auf die vordere Partie des Gestells (2) geschweißten Kulisse (12) und einem mit der Deichsel (4) verbundenen Gleitstück (13), wobei die Baugruppe, gebildet aus der Kulisse (12) und dem Gleitstück (13), in einer Öffnung (18) angeordnet ist, die nahe dem Support (5) in die Deichsel (4) beidseits ihrer Mittelebene eingebracht ist.

3. Pflug nach Anspruch 2, dadurch gekennzeichnet, daß er eine Kulisse (12) umfaßt, bestehend aus zwei parallelen Armen (12a, 12b), die das Gleitstück (13) einschließen, welches Gleitstück (13) in die Öffnung (18) der Deichsel eingepaßt ist.

4. Pflug nach Anspruch 3, dadurch gekennzeichnet, daß er eine Deichsel (4) umfaßt, bestehend aus zwei Holmen (4a, 4b), die beidseits des Gleitstücks (13) angeordnet sind und sich von dem Support (5) bis zu der Traverse (7) des Gestells (2) erstrecken, das die verschiedenen Verankerungslöcher (9) aufweist, und das am Ende der Deichsel (4) ein die Traverse (7) umschließendes Gehäuse (8) bildet.

5. Pflug nach einem der Ansprüche 1 bis 4, dadurch gekennzeichnet, daß er ein Manövrierorgan (19) der Gleitführung (10) in Schraubenform umfaßt, eingefügt zwischen einer Platine (21), die am Ende der Kulisse (12) positioniert ist, und dem Gleitstück (13).

6. Pflug nach einem der Ansprüche 1 bis 5, dadurch gekennzeichnet, daß er komplementäre Mittel umfaßt, die das wahlweise Festlegen des Gleitstücks (13) auf der Deichsel (4) in der von der Bedienungsperson gewünschten Position ermöglichen.

7. Pflug nach Anspruch 6, dadurch gekennzeichnet, daß die Mittel zum Festlegen des Gleitstücks (13) auf der Deichsel (4) von Schrauben (17) gebildet sind, die in Langlöchern geführt sind, welche in Richtung einer im wesentlichen senkrecht zu der Gleitführung (10) verlaufenden Achse orientiert sind.

8. Pflug nach Anspruch 7, dadurch gekennzeichnet, daß er Langlöcher (15) umfaßt, die in Ohren (16) eingearbeitet sind, welche beidseits der Deichsel (4) und der Mittelebene des Gestells (2) angeordnet sind.

9. Pflug nach Anspruch 8, dadurch gekennzeichnet, daß er zwischen dem Kopf der Schrauben (17) und den Ohren (16) Beilagscheiben (17a) umfaßt, die mit Mitteln zum Verriegeln der Position der Schrauben relativ zu den Ohren versehen sind.

10. Pflug nach Anspruch 9, dadurch gekennzeichnet, daß er Beilagscheiben (17a) umfaßt, eingefügt zwischen dem Kopf der Schrauben (17) und den Ohren (16), welche Beilagscheiben (17a) Prägungen (17c) umfassen, deren Form derjenigen der Langlöcher (15) entspricht, die in die Ohren (16) eingearbeitet sind derart, daß die Scheiben (17a) verriegelt werden, und auf diese Weise jede Möglichkeit der Regulierung oder Deregulierung der Seitenneigung unterbinden.

## Claims

1. Plough of the type comprising a rod (4) which is secured, at one of its ends, to the support (5) housed in the forecarriage (1), and which is equipped, at its other end, with an anchoring point (9) which can be varied over the length of the framework (2) supporting the ploughshares (3), which framework (2) is guided at its front end by the said rod (4), characterised in that it comprises on the one hand, a slide (10) provided at the front of the rod (4), in a way which is substantially perpendicular to the direction of advance of the plough, in order to guide the front of the said framework and, on the other hand, in the region of the rear part of the said rod (4), a clevis (8) cooperating with a transverse beam (7) fixed to the framework, which transverse beam is equipped with holes (9) which are distributed along a line parallel to the slide (10); the said slide consisting: - of one part (12) secured to the front end of the framework (2), - of one part (13) linked to the rod and, - of a manoeuvring member (19) interposed between the two parts (12, 13), and in that the part (13) linked to the rod (4) comprises a double degree of freedom: - in rotation about an axis perpendicular to the median plane of the framework (2) and, - in translation along a direction which is substantially perpendicular to the said slide (10).

2. Plough according to Claim 1, characterised in that it comprises a slide (10) consisting of a slide rail (12) welded onto the front part of the framework (2) and of a slider (13) secured to the rod (4); the assembly constituted by the slide rail (12) and the slider (13) is disposed in an orifice (18) made in and on either side of the median plane of the rod (4), in the vicinity of the support (5).

3. Plough according to Claim 2, characterised in that it comprises a slide rail (12) consisting of two parallel arms (12a, 12b) which tightly grip the slider (13), which slider (13) is fitted into the orifice (18) of the rod.

4. Plough according to Claim 3, characterised in that it comprises a rod (4) consisting of two longitudinal beams (4a, 4b) disposed on either side of the slider (13) and which extend from the support (5) to the transverse beam (7) of the framework (2) comprising the various anchoring holes (9) and which form, at the end of the said rod (4), a fork joint (8) tightly gripping the said transverse beam (7).

5. Plough according to any one of Claims 1 to 4, characterised in that it comprises a member (19) for manoeuvring the slide (10), in the form of a screw interposed between a plate (21) situated at the end of the slide rail (12), and the slider (13).

6. Plough according to any one of Claims 1 to 5, characterised in that it comprises complementary means allowing the slider (13) to be secured as desired to the rod (4) in the position desired by the operator.

7. Plough according to Claim 6, characterised in that the means for securing the slider (13) to the rod (4), are constituted by screws (17) guided in oblong holes (15) which are orientated along an axis which is substantially perpendicular to the slide (10).

8. Plough according to Claim 7, characterised in that it comprises oblong holes (15) made in lugs (16) disposed laterally on either side of the rod (4) and of the median plane of the framework (2).

9. Plough according to Claim 8, characterised in that it comprises, between the heads of the screw (17) and the lugs (16), washers (17a) equipped with means for locking the position of the said screws in relation to the said lugs.

10. Plough according to Claim 9, characterised in that it comprises washers (17a), interposed between the heads of the screw (17) and the lugs (16), which washers (17a) comprise drop forgings (17c) whose form corresponds to that of the oblong holes (15) made in the said lugs (16), in such a way as to lock the said washers (17a) and to thus prevent any possibility of setting or of unsetting the cant.

_fig.1_

EP 0 374 052 B1

_fig.2_

1

18
12b
5   17   15   4   4b
6
16
12a  20  17  15  13   4a
17
17a

22
7
2
3
8

_4_
17a
17b
17c
_fig.3_
_4_

17a      17b
17c      _fig.4_

EP 0 374 052 B1